# EUROPEAN PATENT APPLICATION

(11) **EP 4 383 204 A1**
(43) Date of publication of application: **12.06.2024**
(21) Application number: 22306827.1
(22) Date of filing: 08.12.2022
(51) Int. Cl.: G06T 15/30, G06T 15/00

(54) **RENDERING A SECTION VIEW OF A 3D MESH IN A SINGLE PASS**

(71) Applicant: Dassault Systèmes, 78140 Vélizy-Villacoublay (FR)
(72) Inventor: JEAN, Nicolas, 78140 Vélizy-Villacoublay (FR); DELALANDRE, Cyril, 78140 Vélizy-Villacoublay (FR); GARDE, Sameer, 78140 Vélizy-Villacoublay (FR)
(74) Representative: Bandpay & Greuter

(57) **Abstract**

The disclosure notably relates to a computer-implemented method for rendering, by a GPU, a section view of a 3D mesh in a single pass. The method comprises obtaining the 3D mesh having convex polygons, obtaining a clipping plane and rendering the section view of the 3D mesh by: rendering the convex polygons of the 3D mesh, the rendering of the convex polygons of the 3D mesh comprising, for each convex polygon: determining if the convex polygon intersects the clipping plane. If the convex polygon intersects the clipping plane, computing a pair of points on edges of the convex polygon intersected by the clipping plane, storing the pair of points in a GPU-writable buffer. The method also comprises rendering the stored pairs of points in the GPU-writable buffer as a set of lines, the rendering of the section view thereby comprising the rendered convex polygons and the rendered set of lines.

## Description

### TECHNICAL FIELD

The disclosure relates to the field of computer programs and systems, and more specifically to a method, a method of use, a program and a system for rendering, by a Graphical Processing Unit (GPU), a section view of a 3D mesh in a single pass.

### BACKGROUND

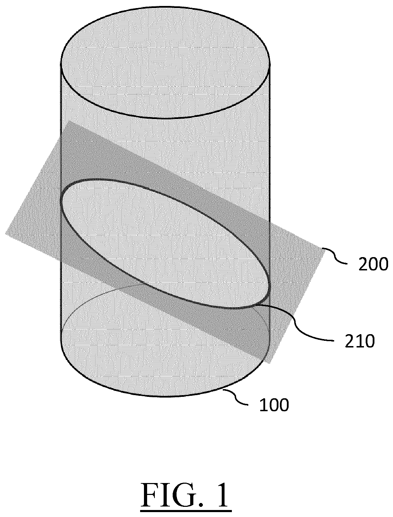

A number of systems and programs are offered on the market for rendering solid bodies. A section view of a solid body is a non-empty intersection of the solid body in three-dimensional space with a plane. FIG. 1 illustrates the section view. For a solid body 100 and a given plane 200, the section view 210 is a set of lines which are the result of the intersection of all surfaces of the solid body 100 with the given plane 200.

However, rendering the section view is a difficult process in the field of computer graphics. As known in the field, the section profile is computed by intersecting a 3D mesh representing the solid body given clipping plane. However, this method is computationally expensive, as known methods have to first compute the intersection, and then rendering the 3D mesh. This is a computationally expensive process, with slow rendering times (precluding real-time implementations for large 3D meshes) and high memory consumption.

Within this context, there is still a need for an improved method for rendering a section view of a 3D mesh.

### SUMMARY

It is therefore provided a computer-implemented method for rendering, by a Graphical Processing Unit (GPU), a section view of a 3D mesh in a single pass. The method comprises obtaining the 3D mesh, the 3D mesh having convex polygons. The method also comprises obtaining a clipping plane. The method also comprises rendering the section view of the 3D mesh by rendering the convex polygons of the 3D mesh. The rendering of the convex polygons of the 3D mesh comprises, for each convex polygon determining if the convex polygon intersects the clipping plane. If the convex polygon intersects the clipping plane, the rendering of the convex polygons of the 3D mesh comprises computing a pair of points on edges of the convex polygon intersected by the clipping plane. The rendering of the convex polygons of the 3D mesh also comprises storing the pair of points in a GPU-writable buffer. The method also comprises rendering the stored pairs of points in the GPU-writable buffer as a set of lines. The rendering of the section view thereby comprises the rendered convex polygons and the rendered set of lines.

The method may comprise one or more of the following/
- further comprising:
   - before the rendering the section view of the 3D mesh, obtaining a viewing direction associated to the clipping plane; and
   - the rendering of the section view further comprising rendering convex polygons positioned along the viewing direction associated to the clipping plane and excluding the rendering of convex polygons not positioned along the viewing direction;
- the determining if the convex polygon intersects the clipping plane further comprises :
   - determining if only one of the vertices of the convex polygon is lying on the clipping plane, and if only one of the vertices of the convex polygon is lying on the clipping plane the convex polygon intersects the clipping plane, excluding the rendering of the convex polygon if the remaining vertices are not positioned along the viewing direction; and/or
   - determining if only two of the vertices of the convex polygon are lying on the clipping plane, and if only two of the vertices of the convex polygon are lying on the clipping plane, excluding the rendering of the convex polygon if the remaining vertices are not positioned along the viewing direction; and/or
   - determining if all the vertices of the convex polygon are lying on the clipping plane; and if all the vertices of the convex polygon are lying on the clipping plane, rendering the convex polygon;
- the GPU-writable buffer is pre-allocated, preferably the GPU-writable buffer is dynamically pre-allocated;
- the storing the pair of points in a GPU-writable buffer comprises:
   - storing in the GPU writable buffer one of the points of the pair as a start point and the other point of pair as an end point; and
   - incrementing by two a value stored in the GPU writable buffer;
- the storing the pair of points in a GPU-writable buffer comprises:
   - storing in a first GPU writable buffer one of the points of the pair as a start point and the other point of pair as an end point; and
   - incrementing by two a value stored in a second GPU writable buffer;
- the GPU-writable buffer is an OpenGL-supported shader storage buffer object, and wherein rendering the stored pairs of points in the GPU-writable buffer as a set of lines is performed by executing an OpenGL indirect draw command;
- the convex polygons of the 3D mesh comprise triangles;
- the obtaining the 3D mesh being performed by a vertex shader and the obtaining the clipping plane being performed by the vertex shader;
- the determining if the convex polygon intersects the clipping plane being performed by a geometry shader, and the computing and storing of the pair of points on edges of the convex polygon intersected by the clipping plane being performed by the geometry shader;
- the rendering the stored pairs of points in the GPU-writable buffer as a set of lines being performed by a rasterizer and a fragment shader.

It is further provide a method of use, with a shader pipeline, of the method for rendering, by a Graphical Processing Unit (GPU), a section view of a 3D mesh in a single pass. The method of use comprises obtaining a shader pipeline. The shader pipeline comprises a vertex shader for obtaining the 3D mesh and the clipping plane and a geometry shader for performing: determining if the convex polygon intersects the clipping plane; if the convex polygon intersects the clipping plane, computing the pair of points on edges of the convex polygon intersected by the clipping plane; storing the pair of points in a GPU-writable buffer. The shader pipeline also comprises a rasterizer and a fragment shader for performing the rendering (according to the above method for rendering) the stored pairs of points in the GPU-writable buffer as the set of lines, the rendering of the section view thereby comprising the rendered convex polygons and the rendered set of lines. The method of use also renders the section view comprising the rendered convex polygons and the rendered set of lines.

The method of use may also comprise displaying the rendered section view of the 3D mesh.

It is further provided a computer program comprising instructions for performing the method and/or the method of use.

It is further provided a system comprising a processor coupled to a memory and a graphical user interface, the memory having recorded thereon the computer program.

### BRIEF DESCRIPTION OF THE DRAWINGS

Non-limiting examples will now be described in reference to the accompanying drawings, where:
- FIG. 1 illustrates the prior art;
- FIG. 2 shows a flowchart of an example of the method;
- FIG. 3 shows an example of the system;
- FIG.s 4 to 9 illustrate the method.

### DETAILED DESCRIPTION

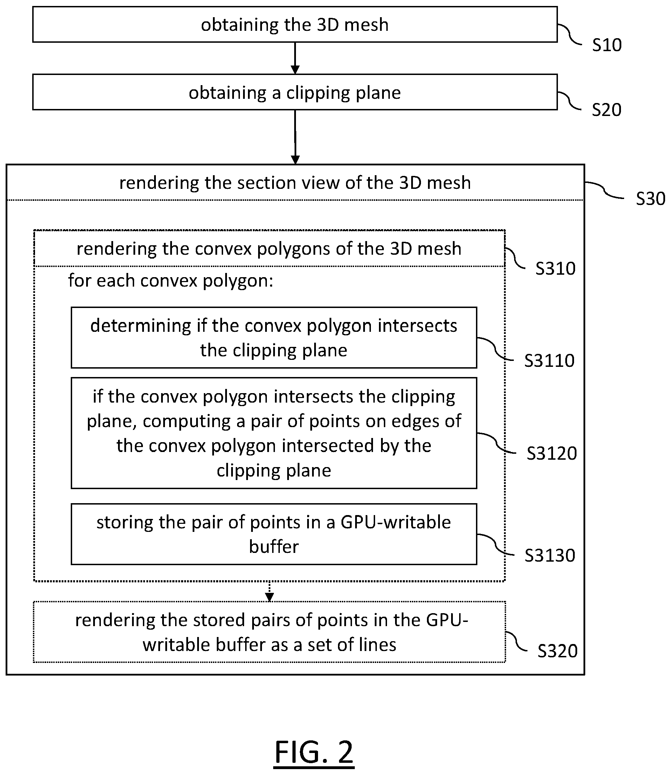

With reference to the flowchart of FIG. 2, it is proposed a computer-implemented method for rendering (also called "rendering method"), by a Graphical Processing Unit (GPU), a section view of a 3D mesh in a single pass. By "rendering" it is meant any series of computations that process the 3D mesh for its posterior display on the computer. The method comprises obtaining S10 the 3D mesh. The 3D mesh has convex polygons. The method also comprises obtaining S20 a clipping plane.

The method renders S30 the section view of the 3D mesh by rendering S310 the convex polygons of the 3D mesh. The rendering of the convex polygons of the 3D mesh at 5310 comprises, for each convex polygon, determining S3110 if the convex polygon intersects the clipping plane. For said convex polygon, if the convex polygon intersects 53120 the clipping plane, the method computes a pair of points on edges of the convex polygon intersected by the clipping plane. For said convex polygon, the method stores 53130 the pair of points in a GPU-writable buffer.

The rendering the section view of the 3D mesh also comprises, by the method, rendering 5320 the stored pairs of points in the GPU-writable buffer as a set of lines. The rendering of the section view thereby comprises the rendered convex polygons and the rendered set of lines.

This improves the rendering of the section view of the 3D mesh. Indeed, the method is able to render both the convex polygon and the result of the intersection (i.e., the computed pair of points) in real time. As the rendering is performed by the GPU, the rendering of the convex polygons and the storing of the pair of points is a computation that is performed substantially in real time (that is, in a single pass). This achieves great gains in performance compared to CPU approaches, which are constrained to performing sequential operations. In particular, the achieved performance gains are achieved thanks to the fact that the pair of points is stored in the GPU-writable buffer (which has a fast access time) when the method determines that the convex polygon intersects the clipping plane.

It is now discussed a method of use of the rendering method. The method of use may comprise obtaining a shader pipeline. The shader pipeline may be a sequence of steps, performed by the GPU, when performing the rendering of the section view. The method of use may initiate the shader pipeline when performing any of the steps of the rendering method. The shader pipeline may be obtained in any manner, e.g., by executing a GPU command, or by calling an API such as OpenGL. In that case, the shader pipeline may be initiated when performing a rendering operation.

The shader pipeline may comprise a vertex shader for obtaining the 3D mesh and the clipping plane.

The shader pipeline may also comprise a geometry shader for performing determining if the convex polygon intersects the clipping plane. If the convex polygon intersects the clipping plane, the shader pipeline may perform computing the pair of points on edges of the convex polygon intersected by the clipping plane. The shader pipeline may perform the storing the pair of points in a GPU-writable buffer.

The shader pipeline may also comprise a rasterizer and a fragment shader for performing the rendering the stored pairs of points in the GPU-writable buffer as the set of lines. The rendering of the section view thereby comprises the rendered convex polygons and the rendered set of lines.

The method of use may render the section view comprising the rendered convex polygons and the rendered set of lines.

The method of use may comprise displaying the rendered section view of the 3D mesh. In other words, the method may output the section view (that is, the result of the rendering method) to the user, e.g., via a graphical user interface.

As the method of use performs the rendering method with the rendering pipeline, the method of use may use both the geometry shader and the rasterizer and fragment shader concurrently, in the GPU. Thus, the method of use focuses on computing intersection at the same time the convex polygons are being rendered using shader pipeline. This helps to maintain real time performance of the displaying, e.g., when the user requires updating the display of the section view, thus providing an improved user experience.

The method is computer-implemented. This means that steps (or substantially all the steps) of the rendering method or the method of use are executed by at least one computer, or any system alike. Thus, steps of the rendering method or the method of use are performed by the computer, possibly fully automatically, or, semiautomatically. In examples, the triggering of at least some of the steps of the rendering method or the method of use may be performed through user-computer interaction. The level of user-computer interaction required may depend on the level of automatism foreseen and put in balance with the need to implement user's wishes. In examples, this level may be user-defined and/or pre-defined.

A typical example of computer-implementation of the rendering method or the method of use is to perform the rendering method or the method of use with a system adapted for this purpose. The system may comprise a processor coupled to a memory and/or a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

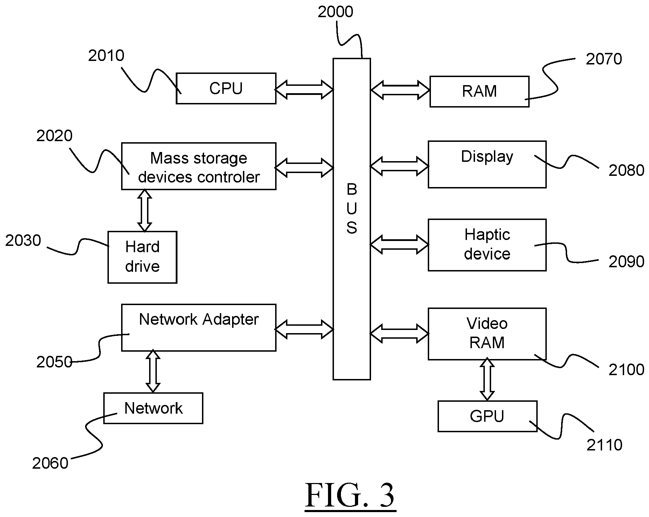

FIG. 3 shows an example of the system, wherein the system is a client computer system, e.g. a workstation of a user.

The client computer of the example comprises a central processing unit (CPU) 3010 connected to an internal communication BUS 3000, a random access memory (RAM) 3070 also connected to the BUS. The client computer is further provided with a graphical processing unit (GPU) 3110 which is associated with a video random access memory 2100 connected to the BUS. Video RAM 3100 is also known in the art as frame buffer. A mass storage device controller 3020 manages accesses to a mass memory device, such as hard drive 3030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 3050 manages accesses to a network 3060. The client computer may also include a haptic device 3090 such as cursor control device, a keyboard or the like. A cursor control device is used in the client computer to permit the user to selectively position a cursor at any desired location on display 3080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

By "single pass", it is meant that more than one of the steps of the method are performed in the GPU, substantially at the same time. The method may perform all of the steps included in step 530, in particular steps 53120 and 53130 in a single parallel computation.

The 3D mesh designates any graph structure, with vertices (3D positions) and edges (e.g., segments) linking vertices two-by-two and forming so-called faces of the mesh (i.e. smallest cycles of edges). The 3D mesh has convex polygons. That is, the faces of the 3D mesh may be formed from vertices being linked so as to form a convex shape. That is, the faces of the 3D mesh may be formed from at least three vertices (e.g., more than three, like four or more), and linked in a convex shape.

The convex polygons of the 3D mesh may comprise (e.g., consist of) triangles. That is, the convex polygons of the 3D mesh may comprise faces formed with three vertices linked by edges. Additionally and/or alternatively, the base mesh may also comprise a quadrangular mesh. That is, each of the faces of the quadrangular base mesh may be formed with four vertices linked by edges.

The 3D mesh may be obtained, at 510, by any type of data acquisition that allows the retrieval or obtention of the 3D mesh by the method. Obtaining S10 the 3D mesh may for example comprise downloading/retrieving (e.g., through a network) said 3D mesh from a (e.g., distant) memory or server or any non-volatile storage where these data have been stored. Alternatively, the 3D mesh may be designed from scratch through a graphical user interface.

The 3D mesh may comprise a representation of an object such as an industrial product (e.g., represented within a scene) which may be any mechanical part, such as a part of a terrestrial vehicle (including e.g. car and light truck equipment, racing cars, motorcycles, truck and motor equipment, trucks and buses, trains), a part of an aerial vehicle (including e.g. airframe equipment, aerospace equipment, propulsion equipment, defense products, airline equipment, space equipment), a part of a naval vehicle (including e.g. navy equipment, commercial ships, offshore equipment, yachts and workboats, marine equipment), a general mechanical part (including e.g. industrial manufacturing machinery, heavy mobile machinery or equipment, installed equipment, industrial equipment product, fabricated metal product, tire manufacturing product), an electro-mechanical or electronic part (including e.g. consumer electronics, security and/or control and/or instrumentation products, computing and communication equipment, semiconductors, medical devices and equipment), a consumer good (including e.g. furniture, home and garden products, leisure goods, fashion products, hard goods retailers' products, soft goods retailers' products), a packaging (including e.g. food and beverage and tobacco, beauty and personal care, household product packaging).

The clipping plane is a 2D surface. The clipping plane may be obtained, at 520, by any type of data acquisition that allows the retrieval or obtention of the clipping plane by the method. Obtaining S20 the clipping plane may for example comprise downloading/retrieving (e.g., through a network) said clipping plane from a (e.g., distant) memory or server or any non-volatile storage where these data have been stored. Alternatively, the clipping plane may provided by the user through a graphical user interface.

The method renders, at 530, the section view of the 3D mesh; that is, the method renders at least a non-empty intersection of convex polygons of the 3D mesh obtained at S10 with the clipping plane obtained at 520. The non-empty intersection may be defined in any manner, e.g., the clipping plane may be positioned in any manner (manually on a graphical user interface or automatically) so that the intersection is non-empty. For example, in the case where there is manual interaction for defining the non-empty intersection, the method may display the clipping plane as a 2D surface of finite dimension, and the user may place the clipping plane on the 3D mesh (e.g., using a graphical interaction tool such as a mouse or touchpad) as desired, so as to obtain the non-empty intersection from which the method renders the section view. It is to be understood that this is an implementation detail.

The rendering of the section view S30 is now discussed.

The method renders 5310 the convex polygons of the 3D mesh, and thus process (each of) the convex polygons of the 3D mesh for its posterior display, as a section view, on the computer. As the computation is performed in the GPU, the method may set threads for each convex polygon for performing the steps of the method S3110 - 53130.

The rendering of the convex polygons of the 3D mesh comprises, for each polygon, determining if the convex polygon intersects S3110 the clipping plane. The intersection may comprise determining if at least one vertex of the polygon lies on (that is, it geometrically overlaps) the clipping plane and/or at least one edge of the polygon crosses the clipping plane e.g., two edges crossing the clipping plane.

If the convex polygon intersects 53120 the clipping plane, the method computes a pair of points on edges of the convex polygon intersected by the clipping plane. In other words, the method computes a pair of points (on 3D space, and thus having 3D coordinates) that form a line traversing between the edges of the convex polygon intersected by the clipping plane, said line being colinear with the clipping plane. Thereby, the line formed by the pair of points "cuts" the convex polygon intersected by the clipping plane.

The method stores 53130 the pair of points in a GPU-writable buffer. A GPU-writable buffer is a writable array of values in GPU memory used for temporary storage. The GPU writable buffer allows writing and/or retrieving data from the region of GPU memory. Thus, the method stores the pair of points in a data structure allocated in the region of GPU memory. The method may store the set of points in any predetermined manner, e.g., by calling an instruction from a shading language configured for this purpose, such as the OpenGL language. As the method stores the pair of points in the GPU-writable buffer, the method may perform the determination of the intersection 3110, the computation of the pair of points S3120, and the storage 53130 in a single pass, as all of the steps are performed on the GPU resources, that is, without requiring intervention by the CPU and/or requiring the transmittal of the stored points to the CPU for posterior treatment.

The method renders 5320 the stored pairs of points in the GPU-writable buffer as a set of lines. Each line may link of the set may link a respective pair of points. The rendering of the section view comprises the rendered convex polygons and the rendered set of lines. Thus, the method presents the combination of the rendered convex polygons, determined as intersecting the clipping plane, and the rendered set of lines.

The method thus improves the efficiency of the rendering the section view. The method performs the rendering of the section profile while the resulting section view is being rendered in the GPU. There is no additional pass to either compute or render the section profile. As the computations and data storage remain on GPU, the performance is real time. Thus even for large models, applications can provide section profile results to users in real time, e.g., allowing the rendering of the section view while clipping planes are being manipulated in a graphical user interface.

The method may further comprise, before the rendering the section view of the 3D mesh, obtaining a viewing direction associated to the clipping plane, that is, a direction from a side of the clipping plane. In other words, the viewing direction denotes a side of the clipping plane maintain geometry that is meant to be displayed to the user. Thus, the viewing direction constrains the rendering of the section view on a portion of the 3D space that is viewed from the side of the clipping plane to which the viewing direction is associated. The viewing direction may comprise, for example, a vector normal to a given side of the clipping plane. The viewing direction may be set in any manner, e.g., by user interaction, for example, by choosing a side of the clipping plane and a vector normal to the side of the clipping plane.

The rendering of the section view may further comprise rendering convex polygons positioned along the viewing direction associated to the clipping plane. That is, the method constrains the rendering to the portion of the 3D space that is viewed from the side of the clipping plane associated to the viewing direction. The method may thus limit the rendering of the portion of the 3D mesh that is positioned along the viewing direction. The method may crop convex polygons determined as intersecting the clipping plane at S3110, and only render the portion of the convex polygon that is positioned along the viewing direction. The method may exclude the rendering of convex polygons not positioned along the viewing direction, that is, the convex polygons on the other side of the clipping plane not associated to the viewing direction.

Thus, memory efficiency is improved, as the GPU does not need to load unnecessarily convex polygons that should not be displayed. In addition, the method improves user experience, as the method crops portions of the polygons not being meant to be displayed to the user. Thus, the rendering provides a smooth surface to the user (that is, the section view), which improves the display quality.

The determining if the convex polygon intersects the clipping plane may further comprise determining if only one of the vertices of the convex polygon is lying on the clipping plane. Additionally, if only one of the vertices of the convex polygon is lying on the clipping plane the convex polygon intersects the clipping plane, the method may exclude the rendering of the convex polygon if the remaining vertices are not positioned along the viewing direction.

Additionally or alternatively, the determining if the convex polygon intersects the clipping plane may further comprise determining if only two of the vertices of the convex polygon are lying on the clipping plane; Additionally, if only two of the vertices of the convex polygon are lying on the clipping plane, the method may exclude the rendering of the convex polygon if the remaining vertices are not positioned along the viewing direction.

Additionally or alternatively, the determining if the convex polygon intersects the clipping plane may further comprise determining if all the vertices of the convex polygon are lying on the clipping plane. Additionally, if all of the vertices of the convex polygon are lying on the clipping plane, the method may render the convex polygon. In other words, the method renders convex polygons that are colinear with the clipping plane.

The method thus improves the quality of the rendering of the section view, as it excludes rendering "corners", that is, polygons that lie on the clipping plane but deform the surface of the section view. Thus, the rendering allows the display of a smooth surface.

The GPU-writable buffer is pre-allocated. In other words, the region of GPU memory used for temporary storage is pre-defined. Preferably, the GPU-writable buffer is dynamically pre-allocated, that is, the region of GPU memory used for temporary storage may be changed to a memory range adapted to fit the data stored by the method.

This results in that the method is guaranteed to store the pair of points on the fly on the memory of the GPU.

The storing the pair of points in a GPU-writable buffer may comprise storing in the GPU writable buffer one of the points of the pair as a start point and the other point of pair as an end point. Additionally, the storing the pair of points in a GPU-writable buffer may increment by two a value stored in the GPU writable buffer. The method may thus render the pair of points as a line (on the set of lines) by drawing a line between the 3D coordinates of the start point and the 3D coordinates of the end point. The method may set any one of the pair of points as the start point (respectively the end point), this may be set by convention. The value stored in the GPU-writable buffer keeps track of the number of start and end points, and thus may be used by the method for determining the number of lines in the set of lines when performing the rendering.

The storing of the pair of points in a GPU-writable buffer may comprise storing in a first GPU writable buffer one of the points of the pair as a start point and the other point of pair as an end point. The first GPU is memory footprint in the GPU, i.e., an amount of writable memory allocated in the GPU. Additionally, the storing the pair of points in a GPU-writable buffer may increment by two a value stored in a second GPU writable buffer. The second GPU is another memory footprint in the GPU, i.e., an amount of writable memory allocated in the GPU The first GPU-writable buffer and the second GPU-writable buffer are two independent memory footprints in the GPU.

This allows the method to render the lines indirectly, that is, the method may perform an indirect draw command on the first GPU-writable buffer containing the start and end points second GPU-writable buffer containing the number of points.

The GPU-writable buffer may be an OpenGL-supported shader storage buffer object (SSBO). By OpenGL-supported shader storage buffer object it is meant that the GPU-writable buffer (that is, the region of GPU memory used for temporary storage by the method) is adapted to be used to store and retrieve data from within the OpenGL Shading Language. As known in the art, OpenGL-supported shader storage buffer objects are provided since version 4.3 of the OpenGL specification.

The OpenGL specification allows that SSBOs may have a size of up to 128MB. The OpenGL specification also allow to allocate the size of the SSBO up to the limit of GPU memory. SSBOs may be writable in the OpenGL specification, for example, a respective SSBO may be atomically writable (i.e., writable bit per bit). SSBOs reads and writes in the OpenGL specification use incoherent memory accesses. SSBOs may have variable storage, up to the size a respective SSBO was bound. This means that the method may access to an array in GPU memory of arbitrary length in an SSBO.

Rendering the stored pairs of points in the GPU-writable buffer as a set of lines may be performed by the method by executing an OpenGL indirect draw command. The OpenGL indirect draw command is a set of instructions, supported on the OpenGL Shading Language, adapted for issuing a drawing command to OpenGL so as to render data from parameters coming from the SSBO. In other words, it is a command where number of primitives are known at the time of execution of command. For example, by using the OpenGL indirect draw command, the method take data (e.g., a starting point and end point and number of points) stored in the SSBO for the rendering.

The purpose of this storage is to avoid the transfer of data from the GPU to the CPU and back. This allows to avoid the use of computations by the CPU. Indeed, the storage and rendering of the pair of points is performed at the level of the GPU, and thus the speed of execution improves significantly.

The obtaining of the 3D mesh may be performed by a vertex shader. The vertex shader is an OpenGL-supported programmable shader that handles, on the GPU, the processing of individual vertices. The vertex shader may take as input the 3D mesh and performs basic processing of each individual vertex of the complex polygons comprised in the 3D mesh.

Additionally, the obtaining of the clipping plane may be performed by the vertex shader. The vertex shader may perform any kind of processing to the clipping plane (e.g., converting the clipping plane into a 2D surface of finite area in 3D space) so as to allow the determination of the intersection of the convex polygon with the clipping plane.

This allows to maintain the operations on the GPU, and thus improve the speed of the method, as it reduces calls to the CPU.

The determining if the convex polygon intersects the clipping plane may be performed by a geometry shader. The geometry shader is a program executed for every primitive (i.e., convex polygon) to be rendered The geometry shader may be an OpenGL-supported programmable shader that governs the processing of primitives. In other words, the geometry shader takes each polygon as input and thus has access to the topology of the convex polygons, e.g., the inside or outside of the convex polygon. With this information, the geometry shader may detect the intersection of the convex polygon with the clipping plane, Additionally, the computing and storing (on the SSBO) of the pair of points detected as lying on edges of the convex polygon intersected by the clipping plane may be performed by the geometry shader. This allows to maintain the storage and processing of the pair of points on GPU memory.

The rendering the stored pairs of points in the GPU-writable buffer as a set of lines is performed by a rasterizer and a fragment shader. The rasterizer is an OpenGL-supported program that converts the pair of points into a rasterized format, that is, a format comprising a series of displayable pixels, dots or lines). The result of the rasterization may be a sequence of one or more fragments. A fragment is a set of state that is used to compute the final data for a pixel (or sample if multisampling is enabled) in the output framebuffer. The state for the fragment includes the fragment's position in screen-space, sample coverage (if multisampling is enabled, and a list of arbitrary data that was output from the vertex or geometry shader.

The fragment shader may take each of the one or more fragments as input, and generating an output comprising a set of colors and a single depth value.

The rasterizer and the fragment shader thus take as input the set of points stored in memory, e.g., as a result of executing the OpenGL indirect draw command, and thus provide an output that is adapted to be displayed to the user.

In an implementation, the determining if the convex polygon intersects the clipping plane is performed by a geometry shader, and the computing and storing of the pair of points on edges of the convex polygon intersected by the clipping plane is performed by the geometry shader. In this implementation, the method stores in the first GPU writable buffer one of the points of the pair as a start point and the other point of pair as an end point. The method may also increment, in the second GPU writable buffer, the stored value by two. In this implementation, both the first and second GPU writable buffer are OpenGL-supported shader storage buffer objects. The method may thus render the stored pairs of points in the GPU-writable buffer as a set of lines by executing the OpenGL indirect draw command. Hence the OpenGL indirect draw command takes as inputs the parameters of the first GPU writable buffer (i.e., a respective start and end points) and parameters of the second GPU writable buffer (i.e., the respective values of start and end points) to render a respective pair of points as a line.

This implementation ensures that the CPU calls are maintained to a minimum and that the computations are maintained in the GPU. Thus, the rendering of both the convex polygons and the set of points can be performed in real time, as the rendering of the points is performed at the same time as the rendering of the polygons.

Examples of the method are now discussed with reference to FIG.s 4 to 9.

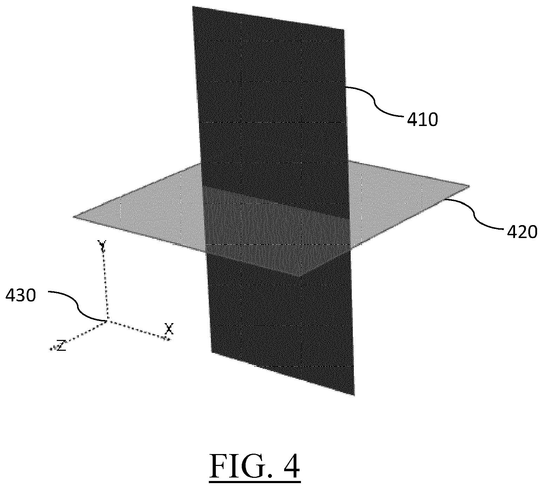

FIG. 4 illustrates the inputs for the rendering method. The method obtains the 3D mesh 410 and the clipping plane 420. The clipping plane 420 is a plane in the XZ-plane, in standard coordinates 430. The clipping plane has a normal vector (not shown) pointing to -Y. As illustrated below, the method maintains the geometry below the clipping plane 420, pointing to -Y (downwards in FIG. 4).

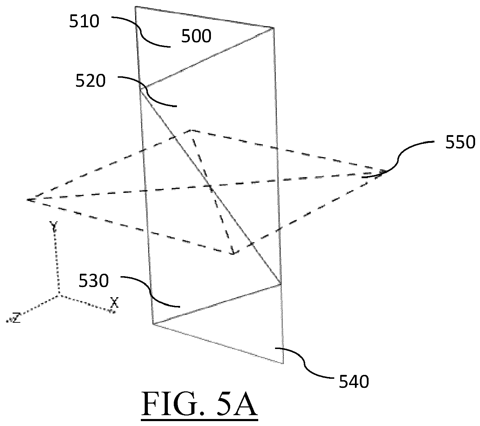

FIG. 5A-5D illustrates the operations of the rendering process on the convex polygons of the 3D mesh.

In FIG. 5A, the 3D mesh 500 comprises triangles 510-540.
- the method creates a first SSBO to hold indirect draw buffer;
- the method creates a second SSBO to store the list of vertices for drawing section profile result lines;
- the method also enables the geometry shader. The geometry shader has an algorithm to compute triangle-plane intersection;
- the first and second SSBOs are also accessible to geometry shader as well. The method executes first the following steps:
- information on vertices 510-540 is stored in current vertex buffer;
- a drawing command is issued, which uses the vertices 510-540;
- a vertex shader that treats each individual vertex to compute various vertex attributes which will be passed on to the geometry shader. These attributes include, transformed position and distance from clipping plane.

Afterwards, the method executes the geometry shader; the geometry shader takes triangles as input and outputs triangles.

The method determines, for each input triangle, if the triangle is intersecting a clipping plane. This is done by comparing the distance to the clipping plane distance for each vertex of the triangle. The clipping plane distance is a signed float value, if two vertices of a line have opposite signed values that means the line segment cuts the clipping plane.

The method also determines, for the input triangle, the following corner cases:
▪ one vertex of the triangle lies on the clipping plane and if remaining two vertices lie on:
   - the same side of the viewing direction of the clipping plane, the triangle is not cut, that is, not excluded from rendering;
   - the opposite side of the viewing direction clipping plane, the triangle is cut, that is, excluded from rendering;
▪ two vertices (i.e., one edge) of the triangle is on the clipping plane and if remaining vertex lies on:
   - the same side of the viewing direction of the clipping plane, the triangle is not cut;
   - the opposite side of the viewing direction clipping plane, the triangle is cut;
▪ all three vertices are lying on the clipping plane, the triangle is not cut.

These corner cases aside, for other triangles, the method determines intersection points between triangle sides and clipping plane; the point of intersection is calculated based on vertex coordinates and their distance from clipping plane.

The objective is to find out two points which will form a line (result of intersection of triangle with clipping plane), thus the resulting points are then added to the first SSBO. Also, the number of points in the second SSBO is incremented by two. If there are more than one clipping plane, this process is repeated for all clipping planes.

The geometry shader outputs a triangle which is same as triangle received as input.

At the end of the rendering of the polygons of the 3D mesh, the method starts drawing section profile result. Appropriate rendering states are set, such as color, line type and thickness. An indirect draw command is executed which utilize the two SSBOs: the first SSBO that contains set of lines in form of start and end points of each line and the second SSBO that contains number of points.

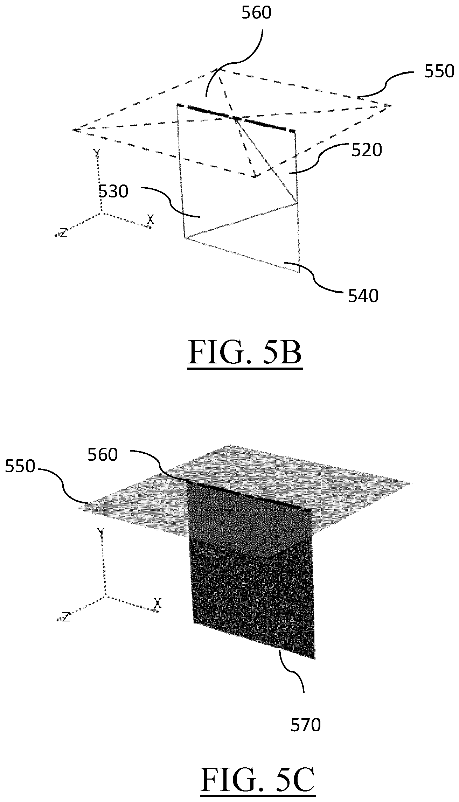

FIG. 5B illustrates the result of the method applied to the mesh 500 of FIG. 5A. The rendered section view comprises a rendered line 560, cropping off the triangles 530 and 520 from the clipping plane 550 (shown here for the sake of illustration). The triangle 540 is rendered without other changes.

FIG. 5C shows the rendered section view as a solid body 570 with the section view 560. The clipping plane 550 is also displayed for the sake of illustration.

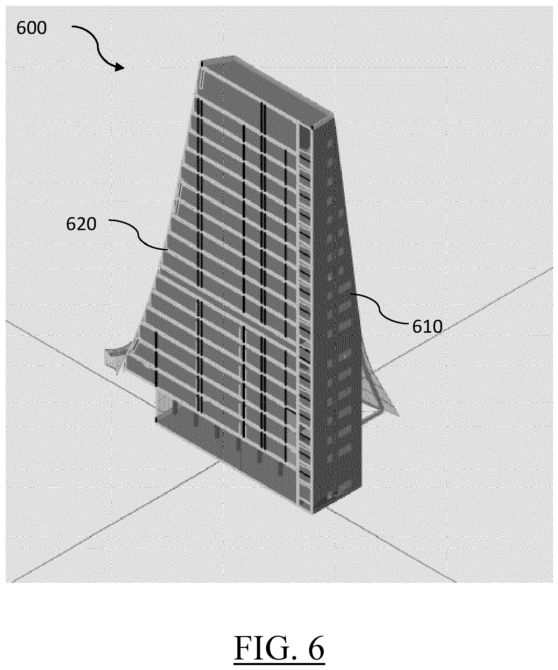

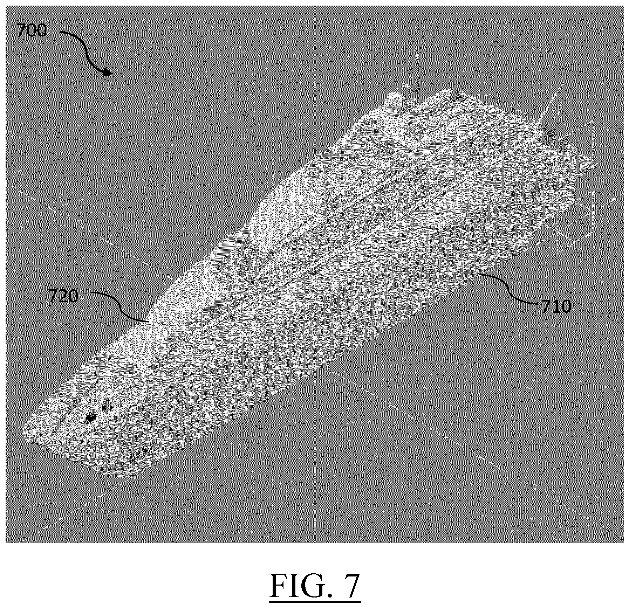

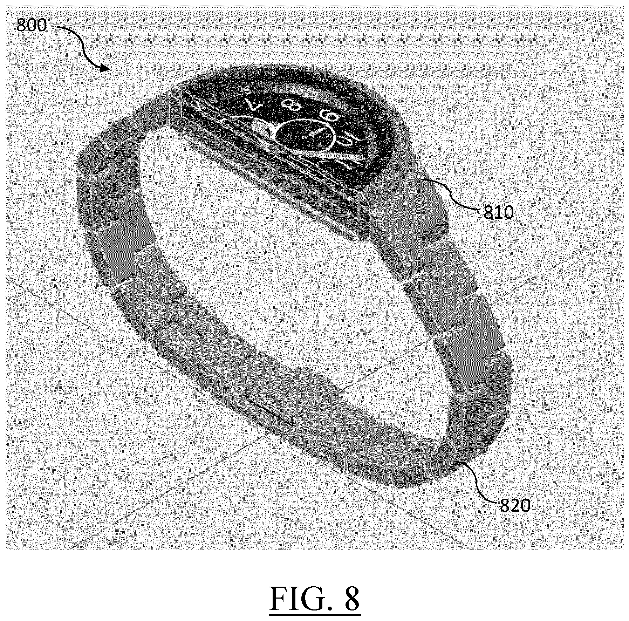

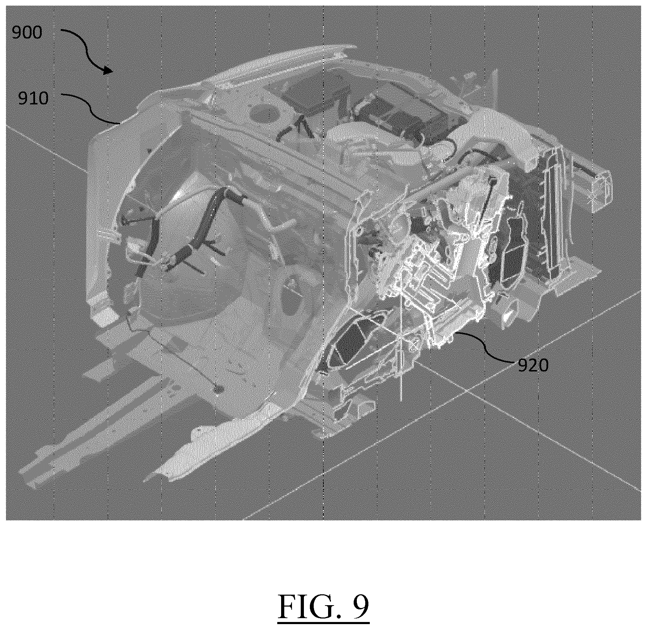

FIG. 6 shows an example of a section view 600 of a 3D mesh, representing a building, obtained with the method. The section view comprises a 3D mesh comprising triangles 610 with a set of lines 620. FIG. 7 shows another example of a section view 700 of a 3D mesh, representing a boat, obtained with the method. The section view comprises a 3D mesh comprising triangles 710 with a set of lines 720. FIG. 8 shows another example of a section view 800 of a 3D mesh, representing a watch, obtained with the method. The section view comprises a 3D mesh comprising triangles 810 with a set of lines 820. FIG. 9 shows another example of a section view 900 of a 3D mesh, representing a motor obtained with the method. The section view comprises a 3D mesh comprising triangles 910 with a set of lines 920.

## Claims

1. A computer-implemented method for rendering, by a Graphical Processing Unit (GPU), a section view of a 3D mesh in a single pass, the method comprising:
- obtaining the 3D mesh, the 3D mesh having convex polygons;
- obtaining a clipping plane; and
- rendering the section view of the 3D mesh by:
-- rendering the convex polygons of the 3D mesh, the rendering of the convex polygons of the 3D mesh comprising, for each convex polygon:
--- determining if the convex polygon intersects the clipping plane;
--- if the convex polygon intersects the clipping plane, computing a pair of points on edges of the convex polygon intersected by the clipping plane;
--- storing the pair of points in a GPU-writable buffer; and
-- rendering the stored pairs of points in the GPU-writable buffer as a set of lines, the rendering of the section view thereby comprising the rendered convex polygons and the rendered set of lines.

2. The method of claim 1, further comprising:
- before the rendering the section view of the 3D mesh, obtaining a viewing direction associated to the clipping plane; and
- the rendering of the section view further comprising rendering convex polygons positioned along the viewing direction associated to the clipping plane and excluding the rendering of convex polygons not positioned along the viewing direction.

3. The method of claim 2, the determining if the convex polygon intersects the clipping plane further comprising :
- determining if only one of the vertices of the convex polygon is lying on the clipping plane, and if only one of the vertices of the convex polygon is lying on the clipping plane the convex polygon intersects the clipping plane, excluding the rendering of the convex polygon if the remaining vertices are not positioned along the viewing direction; and/or
- determining if only two of the vertices of the convex polygon are lying on the clipping plane, and if only two of the vertices of the convex polygon are lying on the clipping plane, excluding the rendering of the convex polygon if the remaining vertices are not positioned along the viewing direction; and/or
- determining if all the vertices of the convex polygon are lying on the clipping plane; and if all the vertices of the convex polygon are lying on the clipping plane, rendering the convex polygon.

4. The method of any one of claims 1 to 3, wherein the GPU-writable buffer is pre-allocated, preferably the GPU-writable buffer is dynamically pre-allocated.

5. The method of any one of claims 1 to 4, the storing the pair of points in a GPU-writable buffer comprising:
- storing in the GPU writable buffer one of the points of the pair as a start point and the other point of pair as an end point; and
- incrementing by two a value stored in the GPU writable buffer.

6. The method of any one of claims 1 to 4, the storing the pair of points in a GPU-writable buffer comprising:
- storing in a first GPU writable buffer one of the points of the pair as a start point and the other point of pair as an end point; and
- incrementing by two a value stored in a second GPU writable buffer.

7. The method of any one of claims 1 to 6, wherein the GPU-writable buffer is an OpenGL-supported shader storage buffer object, and wherein rendering the stored pairs of points in the GPU-writable buffer as a set of lines is performed by executing an OpenGL indirect draw command.

8. The method of any one of claims 1 to 7, wherein the convex polygons of the 3D mesh comprise triangles.

9. The method of any one of claims 1 to 8, the obtaining the 3D mesh being performed by a vertex shader and the obtaining the clipping plane being performed by the vertex shader.

10. The method of any one of claims 1 to 9, the determining if the convex polygon intersects the clipping plane being performed by a geometry shader, and the computing and storing of the pair of points on edges of the convex polygon intersected by the clipping plane being performed by the geometry shader.

11. The method of any one of claims 1 to 10, the rendering the stored pairs of points in the GPU-writable buffer as a set of lines being performed by a rasterizer and a fragment shader.

12. A method of use, with a shader pipeline, of the method of rendering according to any one of claims 1 to 8, comprising:
- obtaining a shader pipeline, comprising:
-- a vertex shader for obtaining the 3D mesh and the clipping plane;
-- a geometry shader for performing:
--- determining if the convex polygon intersects the clipping plane;
---- if the convex polygon intersects the clipping plane, computing the pair of points on edges of the convex polygon intersected by the clipping plane;
---- storing the pair of points in a GPU-writable buffer; and
-- a rasterizer and a fragment shader for performing the rendering the stored pairs of points in the GPU-writable buffer as the set of lines, the rendering of the section view thereby comprising the rendered convex polygons and the rendered set of lines; and
- rendering the section view comprising the rendered convex polygons and the rendered set of lines.

13. The method of use of claim 12, comprising displaying the rendered section view of the 3D mesh.

14. A computer program comprising instructions for performing the method of any of claims 1 to 11 and/or the method of use of claim 12 or 13.

15. A system comprising a processor coupled to a memory and a graphical user interface, the memory having recorded thereon the computer program of claim 14.
